# Europäisches Patentamt

# European Patent Office

# Office européen des brevets

(19)

(11) Veröffentlichungsnummer: **0 141 186**
**B1**

(12)
# EUROPÄISCHE PATENTSCHRIFT

(45) Veröffentlichungstag der Patentschrift:
12.08.87

(51) Int. Cl.⁴: **B 60 S 1/40**

(21) Anmeldenummer: 84110639.2

(22) Anmeldetag: 12.09.84

(54) Scheibenwischerhalterung.

(30) Priorität: 13.09.83 CH 4987/83

(43) Veröffentlichungstag der Anmeldung:
15.05.85 Patentblatt 85/20

(45) Bekanntmachung des Hinweises auf die Patenterteilung:
12.08.87 Patentblatt 87/33

(84) Benannte Vertragsstaaten:
DE FR GB

(56) Entgegenhaltungen:
DE-A-2 709 893
US-A-2 206 343

(73) Patentinhaber: Equipements Automobiles Brevetés PAUL JOURNEE S.A., 39- 41, Avenue Marceau, F-92404 Courbevoie Cedex (FR)

(72) Erfinder: Hancou, Théodore, 11, Avenue des Cavaliers, CH- 1224 Chene- Bougeries (Genf) (CH)

(74) Vertreter: Patentanwaltsbüro Cohausz & Florack, Postfach 14 01 47, D-4000 Düsseldorf 1 (DE)

LIBER, STOCKHOLM 1987

## Beschreibung

Die Erfindung betrifft eine Halterung zum Befestigen eines Wischerblattes auf einem Schwenkarm, die das Anbringen von Wischerblättern verschiedener Typen ermöglicht.

In der Regel ist vorgesehen, dann, wenn das Wischerblatt einer Scheibenwischervorrichtung abgenutzt ist ein Wischerblatt auf eine Wischervorrichtung zu montieren, die aus einer deformierbaren Tragkonstruktion und dem Wischerblatt besteht, und diesen Wischer auf einen hin, und herbewegbaren Schwenkarm der Wischervorrichtung so zu befestigen, daß dieses Blatt leicht ausgewechselt werden kann und zwar ohne Risiko eines ungewollten Ablösens des Blattes. Die unterschiedlichen Formen und Abmessungen von Wischerarmen, insbesondere ihrer Enden die das Wischerblatt aufzunehmen haben, bedingen in der Regel ein Zwischenstück zwischen dem Arm und dem Blatt. Siehe z.B. DE-A-2 709 893 entsprechend dem Oberbegriff Anspruchs 1. Trotz aller Bemühungen beim Herstellen von Scheibenwischern gibt es noch eine große Anzahl von Zwischenstücken, was den Preis des Wischers verteuert, da jeweils nur ein einziges Teil benötigt wird und die anderen weggeworfen werden können. Ferner sind die Wahl und der Einsatz des Zwischenstücks häufig umständlich.

Aufgabe der Erfindung ist, ein einziges Zwischenstück zu schaffen, dessen Benutzung sehr einfach ist und die Montage eines Wischerblatts auf praktisch allen bekannten Arten von Wischerarmen gestattet.

Diese Aufgabe wird gemäß der Erfindung dadurch gelöst daß die Halterung aus einem Kunststoff-Formgußkörper mit einem angeformten Gelenk, das ihn in zwei etwa symmetrische Teile teilt, besteht, sowie aus in jedem der Teile vorgesehenen ineinander eingreifenden Schnappvorrichtungen zur Verriegelung der beiden Teile miteinander, nachdem sie um das Gelenk aufeinandergeklappt sind, wobei in dem nach dem Zusammenfalten einander zugekehrter Seiten der Teile Rillen vorgesehen sind, die nach dem Aufeinanderliegen der Teile Kanäle zum Aufnehmen verschiedener Arten eines Schwenkarmendstücks bilden, und Arretierorgane für die verschiedenen Arten von Schwenkarmen sowie ein Befestigungsmittel am Körper vorgesehen ist zum Halten des Schwenkarms, nachdem der Körper gefaltet und verriegelt ist.

Die Zeichnungen zeigen ein Ausführungsbeispiel der Erfindung.

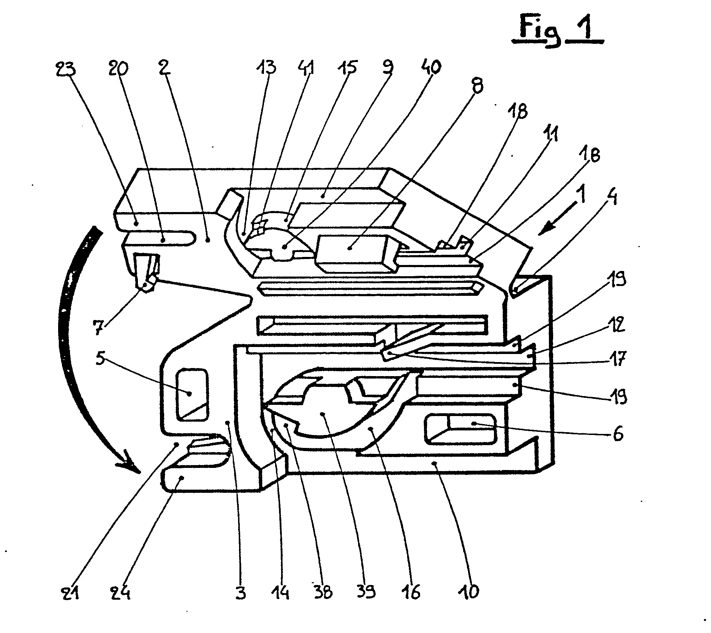

Fig. 1 zeigt eine perspektivische Ansicht der Halterung ohne Schwenkarm,

Fig. 2 bis 5 zeigen Ansichten gemäß Fig. 1 in kleinerem Maßstab mit verschiedenen Wischerarmen,

Fig. 6 zeigt perspektivisch eine Halterung gemäß Fig. 1 bis 5, die auf dem Ende eines Wischerarmes sitzt und ein damit verbundenes Wischerblatt

Fig. 7 bis 10 zeigen in größerem Maßstab eine Halterung gemäß Fig. 1 bis 5 vor dem Falten in die das Ende eines Wischerarmes eingesetzt ist.

Das dargestellte Ausführungsbeispiel der Erfindung besteht aus einem Körper 1 aus elastischem Kunststoff und zwar aus zwei im wesentlichen symmetrischen Teilen 2, 3, die durch ein Scharnier 4 miteinander verbunden sind. Körper 1 und Scharnier 4 sind nach herkömmlichen Formgußtechniken hergestellt.

Der Teil 3 des Körpers 1 besitzt zwei Öffnungen 5 und 6, in die während des Umfaltens des Körpers 1 um das Scharnier 4 zwei elastische Haken 7 und 8 des Teils 2 eingreifen und so hierdurch eine Zentrierung und die Schnappbefestigung der Teile 2 und 3 ineinander sicherstellen. An den dem Scharnier 4 gegenüberliegenden Enden besitzen die Teile 2 und 3 eine offene geradlinige Rille 9 und 10, die es ermöglicht, die Teile 2 und 3 mittels eines Fingernagels voneinander zu trennen bei elastischer Deformation der Haken 7 und 8.

Die Teile 2 und 3 des Körpers 1 weisen auf ihren nach dem Zusammenfalten einander zugekehrten Seiten geradlinige Rillen 11 und 12 auf, die parallel zum Scharnier 4 verlaufen und am einen Ende des Körpers 1 auslaufen. Die Rillen 11 und 12 sind durch kreisbogenförmige Rillen 13 und 14 verlängert, so daß die Gesamtheit der Rillen 11 bis 14 nach dem Schließen und Verriegeln des Körpers 1 einen Kanal bilden, der mit einer geradlinigen Teilstrecke 1 am einen Ende des Körpers 1 ausläuft und durch ein kurvenförmiges Stück verlängert ist. Die offenen Rillen 9 und 10 verlängern die kreisbogenförmigen Rillen 13 und 14 derart daß sie im geschlossenen Körper 1 den genannten Kanal verlängern. Die kurvenförmigen Rillen 15 und 16 erreichen die Enden der Rillen 13 und 14 jeweils in einem Zwischenbereich der Rillen 11 und 12, so daß sie nach dem Falten des Körpers 1 einen kurvenförmigen Zwischenkanal bilden.

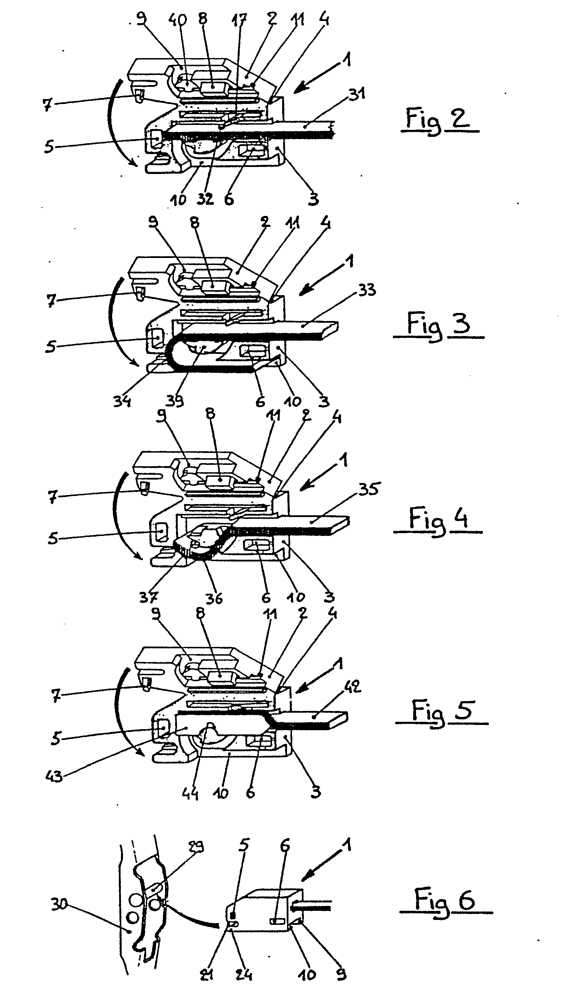

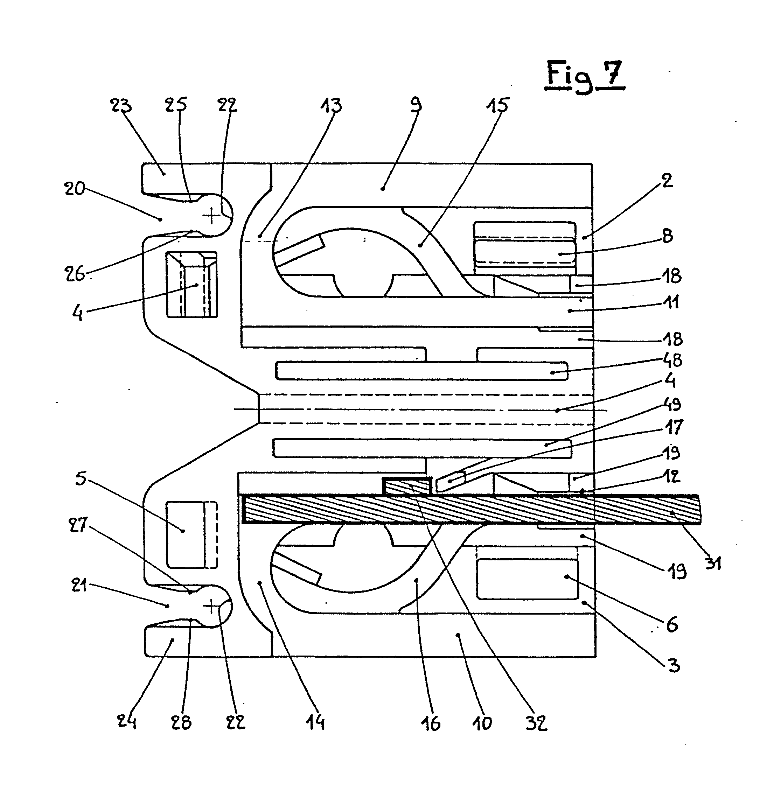

Der Teil 3 des Körpers 1 besitzt ferner als Arretierung (z. B. Anschlag) einen elastisch geneigten Finger 17, dessen freies Ende in die Rille 12 eingreift. Ferner sind die geradlinigen Rillen 11 und 12 an ihrem Ausgang durch Abstufungen 18 und 19 erweitert. Die Teile 2 und 3 weisen auf ihren den Rillen 11 und 12 gegenüberliegenden Enden Kerben 20 und 21 auf mit geneigten Flanken und einem Kreisbogen 22 größeren Durchmessers, so daß ein Finger 23, 24 und Haltenocken 25, 26, 27 und 28 (s. Fig. 7) gebildet werden. Wenn der Körper 1 gefaltet wird, stehen die Kerben 20 und 21 einander gegenüber und ermöglichen es in bekannter Weise, eine zylindrische Achse 29 (Fig. 6) einzuführen, die mit dem Wischerarm 30 bei elastischer Verformung der elastischen Finger 23 und 24 und den Nocken 25 bis 25 eine formschlüssige Verbindung eingeht.

Die Fig. 2 und 7 zeigen eine Wischerblatthalterung solcher bekannten Art, in die das freie geradlinige, mit einem Haltezapfen 32 versehene Ende 31 in die Rille 12 eingeschoben ist wobei der Zapfen 32 den elastischen Finger 17 zurückdrückt. Nach dem Schließen des Körpers 1 verhindert der Finger 17 ein Verschieben des Armes 31. Die relative Zentrierung der Teile 2 und 3 erfolgt durch eine Rille 48 und einen Schlitz 49.

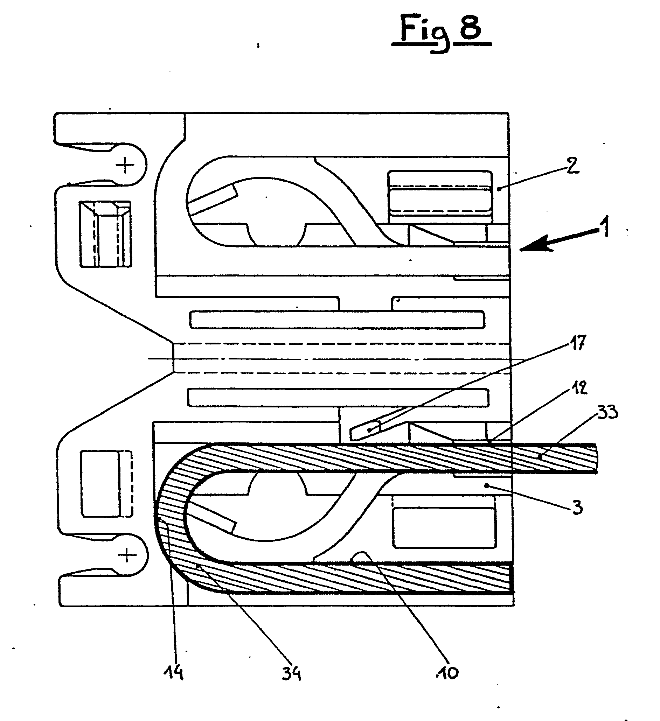

Bei der Ausführungsart gemäß den Fig. 3 und 8 schließt der Arm 33 mit einem Haken 34 ab. Dieser Teil des Armes wird in die Rillen 12, 14, 10 rechtwinklig zur Ebene des Teils 3 eingeschoben unter Zurückschieben des Fingers 17. Die Verriegelung in dieser Stellung erfolgt nach dem Schließen der Teile 2 und 3 des Körpers 1.

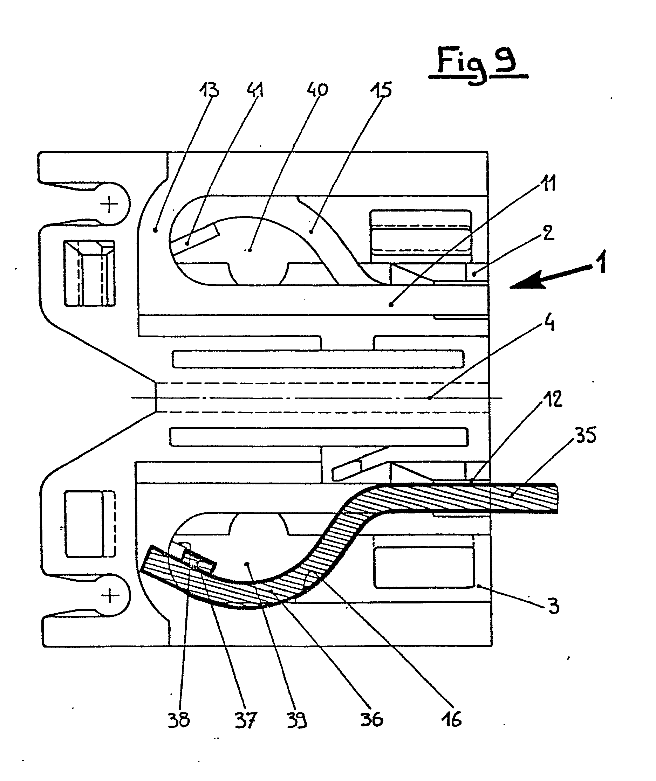

Bei der Ausführung nach Fig. 4 und 9 hat der Arm 35 ein gebogenes Endstück 36, das einen Zapfen 37 aufweist. Der Arm 35 wird rechtwinklig zur Ebene des Teils 3 in die Rille 12 eingesetzt. Das gebogene Endstück 36 liegt dann in der kurvenförmigen Rille 16. Der Zapfen 37 sitzt in einer Kerbe 38, die sich im Block 39 des Teils 3 befindet, das die Rillen 12, 14 und 16 voneinander trennt. Ebenso trennt ein Teil 2 den Block 40 die Rillen 11, 13 und 15 voneinander und weist eine komplementäre Einkerbung 41 auf. Nach dem Schließen des Teils 1 um das Scharnier 4 wird der Arm 35 verriegelt und hierbei der Zapfen 37 in den Kerben 38, 41 eingeschlossen.

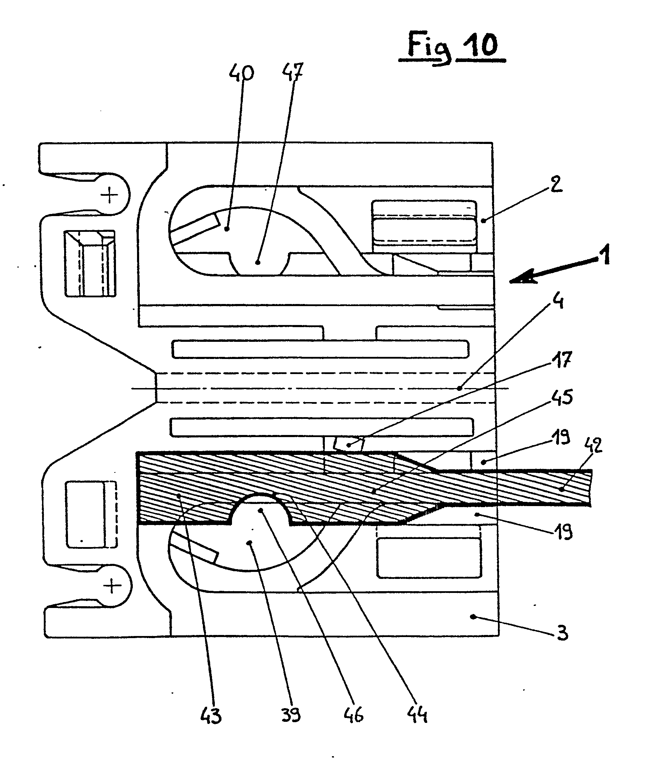

Bei der Anordnung nach Fig. 5 und 10 ist der Arm 42 an seinem Ende um seine Achse im rechten Winkel gedreht so daß er ein rechteckiges Endstück 43 hat, das mit einem halbkreisförmigen Ausschnitt 44 versehen ist. Der Arm 42 wird rechtwinklig zur Ebene des Teils 2 in die Rille 12 eingesetzt. Der Torsionsbereich 45 zwischen dem Arm 42 und dem Ende 43 sitzt in den Abstufungen 19. Nach dem Auslösen des elastischen·Fingers 17 sitzt das Ende 43 gleichermaßen in vorgenannter Abstufung 19. Die Kerbe 44 umschließt einen halbkreisförmigen Vorsprung 46 der sich in dem Block 39 befindet. Der Block 40 weist ferner einen halbkreisförmigen Vorsprung 47 innerhalb des Teils 2 auf. Durch das Schließen des Körpers 1 um das Scharnier 4 erfolgt die Verriegelung des Armes 42.

## Patentansprüche

1. Halterung eines Scheibenwischerblatts auf einem Scheibenwischerschwenkarm dadurch gekennzeichnet, daß sie aus einem Kunststoff-Formgußkörper (1) mit einem angeformten Gelenk (4) das ihn in zwei etwa symmetrische Teile (2, 3) teilt, besteht sowie aus in jedem der Teile (2, 3) vorgesehenen ineinander eingreifenden Schnappvorrichtungen (5, 7; 6, 8) zur Verriegelung der beiden Teile (2, 3) miteinander, nachdem sie um das Gelenk (4) aufeinandergeklappt sind, wobei in dem nach dem Zusammenfalten einander zugekehrter Seiten der Teile (2, 3) Rillen (11, 12; 13, 14; 9, 10; 15, 16) vorgesehen sind, die nach dem Aufeinanderliegen der Teile (2, 3) Kanäle zum Aufnehmen verschiedener Arten eines Schwenkarmenstücks (31, 33; 35, 42) bilden und Arretierorgane (17, 38; 41; 19, 20; 46, 47) für die verschiedenen Arten von Schwenkarmen (31, 33, 35, 42) sowie ein Befestigungsmittel (20 - 28) am Körper (1) vorgesehen ist zum Halten des Schwenkarms , nachdem der Körper (1) gefaltet und verriegelt ist.

2. Halterung nach·Anspruch 1, dadurch gekennzeichnet, daß die Schnapperelemente mindestens in dem einen Teil (2) einen elastischen Haken (7, 8) aufweisen, und in dem anderen Teil (3) eine entsprechende Öffnung (5, 6) aufweisen.

3. Halterung nach·Anspruch 1 oder 2, dadurch gekennzeichnet, daß die vorgenannten Rillen einen geradlinigen Teil aufweisen, der am einen Ende des Körpers ausläuft und einen daran anschließenden kreisbogenförmigen Teil (13, 14) aufweisen, der durch einen geradlinigen Teil (9, 10) und durch ein Bogenstück (15, 16) bis zum erstgenannten geradlinigen Teil verlängert ist.

4. Halterung nach·Anspruch 3, dadurch gekennzeichnet, daß der zweite geradlinige Teil (9, 10) seitlich aus dem Teil (2, 3) des Körpers (1) ausläuft.

5. Halterung nach einem der Ansprüche 1 bis 4, dadurch gekennzeichnet, daß die Arretierungen einen geneigten elastischen Finger (17) aufweisen, der in eine geradlinige Rille (12) eines Teils (3) des Körpers (1) hineinragt.

6. Halterung nach einem der Ansprüche 1 bis 3, dadurch gekennzeichnet, daß die Arretierungen eine Kerbe (38, 41) in dem Block (39, 40) aufweisen, der die Rillen (11, 13, 15-12, 14, 16) in den Teilen (2, 3) des Körpers (1) voneinander trennt.

7. Halterung nach einem der Ansprüche 1 bis 6, dadurch gekennzeichnet, daß die erstgenannten Rillen (11, 12) stufenweise Erweiterungen (19) und in jedem Teil (2, 3) einen Vorsprung (46, 47) haben.

## Claims

1. Holder to support a windscreen wiper blade on a pivotable windscreen wiper arm, characterised in that it consists of a synthetic plastics moulded body (1) having moulded on it a joint (4) which divides it into two substantially symmetrical parts (2, 3), the support also comprising, in each of the parts (2, 3) and interengaging each other, snap-fastening devices (5, 7; 6, 8) for locking the two parts (2, 3) to each other once they have been folded onto each other about the hinge (4), there being in the sides of the parts (2, 3) which face each other after the support has been folded together, grooves (11, 12; 13, 14; 9, 10; 15, 16) which, after the parts (2, 3) have been placed on each other, form passages to receive various types of a pivoting arm end piece (31, 33; 35, 42), and locking means (17, 38; 41; 19, 20; 46, 47) for the various types of pivot arms (31, 33, 35, 42) as well as a fixing means (20 to 28) on the body (1) for holding the pivot arm afer the body (1) has been folded over and locked.

2. Support according to Claim 1, characterised in that the snap-fastening elements in at least one part (2) comprise a resilient hook (7, 8) and a corresponding aperture (5, 6) in the other part (3).

3. Support according to Claim 1 or 2, characterised in that the aforesaid grooves have a rectilinear portion which runs out at one end of the body, and have adjacent thereto an arcuate part (13, 14) which is extended by a rectilinear part (9, 10) and by a curved portion (15, 16) as far as the first-mentioned rectilinear part.

4. Support according to Claim 3, characterised in that the second rectilinear part (9, 10) runs laterally out of the part (2, 3) of the body (1).

5. Support according to one of Claims 1 to 4, characterised in that the locking means comprise an inclined resilient finger (17) which projects into a rectilinear groove (12) in a part (3) of the body (1)..

6. Support according to one of Claims 1 to 3, characterised in that the locking means comprise a notch (38, 41) in the block (39, 40) which divides from one another the grooves (11, 13, 15 - 12, 14, 16) in the parts (2, 3) of the body (1).

7. Support according to one of Claims 1 to 6, characterised in that the first-mentioned grooves (11, 12) have stepwise widened parts (19) and in each part (2, 3) a projection (46, 47).

**Revendications**

1. Attache de fixation d'un balai d'essuie-glace sur un bras d'essuie-glace oscillant, caractérisée par le fait qu'elle est constituée d'un corps (1) en matière synthétique moulée comprenant une charnière (4) venue de moulage qui la sépare en deux parties (2, 3) sensiblement symétriques, comprenant aussi des organes d'encliquetage (5, 7, 6, 8) pénétrant l'un dans l'autre prévus dans chacune des parties (2, 3) pour le verrouillage des deux parties (2, 3) l'une sur l'autre après pliage l'une sur l'autre autour de ladite charnière (4), des rainures complémentaires (11, 12-13, 14 - 9, 10 - 15, 16) ménagées dans chacune des faces desdites parties (2, 3) qui sont en regard l'une de l'autre après pliage de manière à former des canaux récepteurs pour divers types d'extrémité de bras oscillants (31, 33, 35, 42), et des organes d'arrêt (17, 38-41, 19-20, 46-47), pour les divers types de bras oscillants (31, 33, 35, 42) ainsi qu'un moyen de fixation (20-28) prévu sur le corps (1) pour maintenir le bras oscillant après que le corps (1) soit plié et verrouillé.

2. Attache selon la revendication 1, caractérisée par le fait que lesdits organes d'encliquetage comprennent au moins un crochet élastique (7, 8) dans une partie (2) et une fenêtre (5, 6) correspondante dans l'autre partie (3).

3. Attache selon l'une des revendications 1 et 2, caractérisée par le fait que lesdites rainures comprennent une portion rectiligne qui débouche à une extrémité du corps et une portion en arc-de-cercle (13, 14) s'y raccordant et qui est prolongée par une portion rectiligne (9, 10) et par une portion curviligne (15, 16) jusqu'à la première portion rectiligne (11, 12).

4. Attache selon la revendication 3, caractérisée par le fait que la seconde portion rectiligne (9, 10) débouche latéralement de la partie (2, 3) du corps (1).

5. Attache selon l'une des revendications 1 à 4, caractérisée par le fait que lesdits moyens d'arrêt comprennent un doigt élastique incliné (17) qui pénètre dans une rainure rectiligne (12) d'une partie (3) du corps (1).

6. Attache selon l'une des revendications 1 à 3, caractérisée par le fait que lesdits moyens d'arrêt comprennent une encoche (38, 41) dans le bloc (39, 40) qui sépare l'une de l'autre les rainures (11, 13, 15 - 12, 14, 16) dans les parties (2, 3) du corps (1).

7. Attache selon l'une des revendications 1 à 6, caractérisée par le fait que les premières rainures (11, 12) ont un élargissement en gradin (19) et une saillie (46, 47) dans chaque partie (2, 3).

Fig 1

Fig 2

Fig 3

Fig 4

Fig 5

Fig 6

Fig 7

## Fig 8

Fig 9

## Fig 10